# EUROPÄISCHE PATENTSCHRIFT

(11) **EP 1 598 242 B1**
(45) Veröffentlichungstag und Bekanntmachung des Hinweises auf die Patenterteilung: **20.09.2006**
(21) Anmeldenummer: 05009965.4
(22) Anmeldetag: 06.05.2005
(51) Int. Cl.: B60R 13/04

(54) **Verkleidung eines seitlichen Längsträgers eines Kraftfahrzeuges**
Vehicle body sill trim
Habillage d'un longeron de véhicule

(30) Priorität: 17.05.2004 DE 102004024338
(43) Veröffentlichungstag der Anmeldung: 23.11.2005
(73) Patentinhaber: Bayerische Motoren Werke Aktiengesellschaft, 80809 München (DE)
(72) Erfinder: Schuermann, Marcus, 82223 Eichenau (DE); Riedl, Wilhelm, 85276 Pfaffenhofen (DE)

(56) Entgegenhaltungen:
- DE-A1- 3 606 812
- DE-U- 1 911 374
- PATENT ABSTRACTS OF JAPAN Bd. 2002, Nr. 05, 3. Mai 2002 (2002-05-03) & JP 2002 002402 A (NISSAN MOTOR CO LTD), 9. Januar 2002 (2002-01-09)
- PATENT ABSTRACTS OF JAPAN Bd. 017, Nr. 455 (M-1466), 20. August 1993 (1993-08-20) & JP 05 104997 A (HONDA MOTOR CO LTD), 27. April 1993 (1993-04-27)
- PATENT ABSTRACTS OF JAPAN Bd. 2002, Nr. 04, 4. August 2002 (2002-08-04) & JP 2001 347898 A (MURATA KYOICHI), 18. Dezember 2001 (2001-12-18)

## Beschreibung

Die Erfindung betrifft eine Verkleidung eines seitlichen Längsträgers eines Kraftfahrzeuges gemäß dem Oberbegriff des Anspruchs 1.

Es ist bereits bekannt, die seitlichen Längsträger von Kraftfahrzeugen durch aerodynamische Verkleidungen abzudecken, die zusammen mit der Außenwand des jeweiligen Längsträgers einen geschlossenen Hohlkörper bilden. Solche Verkleidungen bestehen in der Regel aus Kunststoffen, die formsteif und gegebenenfalls lackierfähig sind. Die Verkleidung kann sich von einem vorderen Radhaus bis zu einem hinteren Radhaus erstrecken und deckt den Bereich unterhalb der vorhandenen Kraftfahrzeugtüren bis zu einem Bodenbereich des Kraftfahrzeuges ab.

Eine solche Verkleidung ist im Dokument JP-A-2002 002402, das als nächstliegender Stand der Technik angesehen wird, offenbart.

Aufgabe der Erfindung ist es, eine Verkleidung eines seitlichen Längsträgers eines Kraftfahrzeuges zu schaffen, die die Herstellung des Kraftfahrzeuges vereinfacht.

Diese Aufgabe wird durch die Merkmale des Anspruchs 1 gelöst.

Bei der erfindungsgemäßen Verkleidung ist mindestens ein zusätzlicher Verkleidungsabschnitt vorgesehen, der sich in eine Türausschnittsöffnung erstreckt und dort die Funktion einer Trittleiste hat. Durch die erfindungsgemäße Verkleidung ergibt sich in einfacher Weise eine zusätzliche Verkleidungsfunktion.

Der erfindungsgemäße zusätzliche Verkleidungsabschnitt weist in einer vorteilhaften Ausführungsform eine Vertiefung oder Aussparung auf, in die ein Einstiegsleistenelement befestigbar ist, das neben der Trittschutzfunktion auch eine Designfunktion hat. Vorteilhafterweise kann das Einstiegsleistenelement in einer vorbestimmten Farbe und/oder aus einem vorbestimmten Material bestehen.

Das erfindungsgemäße Einstiegsleistenelement kann Aussparungen und/oder Erhebungen aufweisen, die weitere optische Effekte, wie eine Beleuchtung, beinhalten. In dem erfindungsgemäßen Einstiegsleistenelement kann beispielsweise ein Designelement, wie ein Schriftzug oder ein Bild, enthalten sein, das beispielsweise auf die Marke und/oder das Modell usw. hinweist.

Durch die erfindungsgemäße Verkleidung kann eine Bearbeitung der Oberfläche der Türausschnittsöffnung eines Rohbaus, die in einem Seitenrahmen ausgebildet ist, entfallen. Ferner ist vorteilhaft, dass die Integration der Verkleidung des Schwellers und der Türausschnittsöffnung in einem einzigen Bauteil eine Montageerleichterung ergibt.

Eine Ausführungsform der Erfindung wird nachstehend anhand der Figuren beispielshalber beschrieben. Dabei zeigen:
- Fig. 1: eine perspektivische Ansicht einer Verkleidung im eingebauten Zustand, die einen Längsträger sowie vordere und hintere Türausschnittsöffnungen abdeckt,
- Fig. 2: eine perspektivische Ansicht der in der Fig. 1 gezeigten Verkleidung, aus der die beiden zusätzlichen Verkleidungsabschnitte erkennbar sind und
- Fig. 3: eine Querschnittsansicht im Bereich einer Tür, in der eine Vertiefung zur Aufnahme eines Einstiegsleistenelementes erkennbar ist.

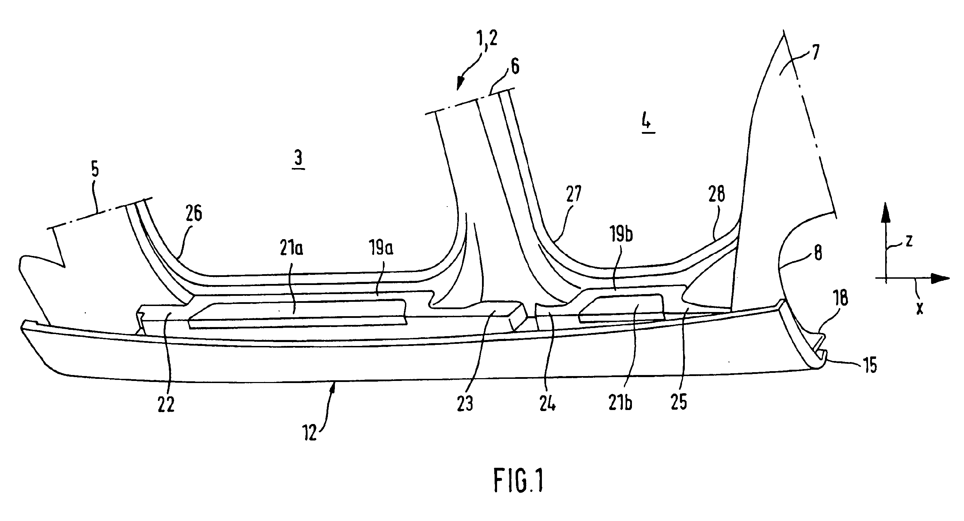

In der Fig. 1 ist ein Seitenrahmen 2 eines Kraftfahrzeuges 1 mit einer teilweise dargestellten vorderen und hinteren Türausschnittsöffnung 3 und 4 erkennbar. Die Türausschnittsöffnungen 3, 4 werden durch eine vordere, eine mittlere und durch eine hintere Säule 5, 6, 7 begrenzt.

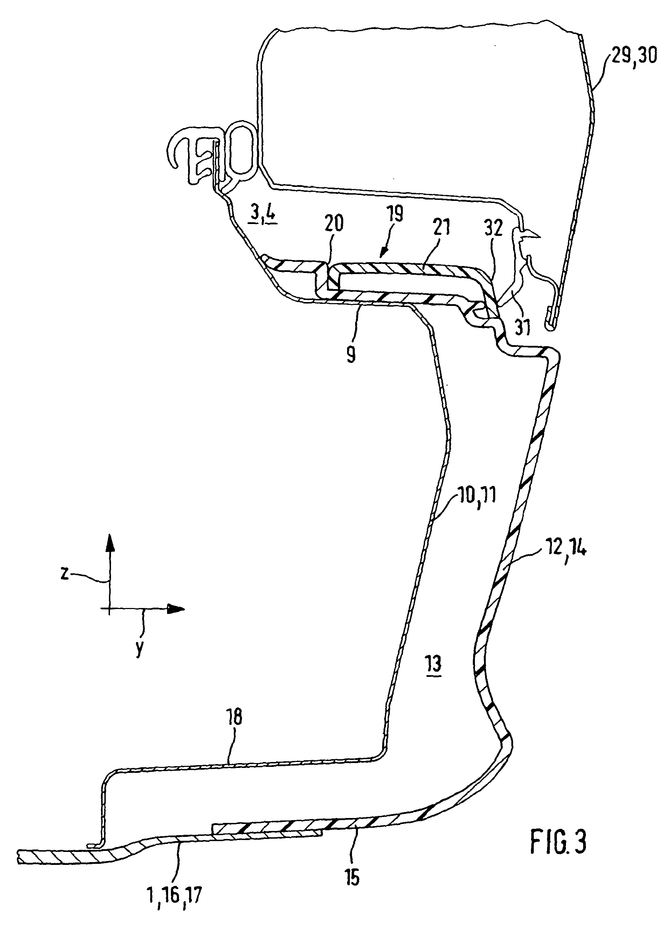

An die vordere Säule 5 schließt sich ein nicht dargestelltes vorderes Radhaus und an die hintere Säule 7 ein hinteres Radhaus 8 an, das teilweise erkennbar ist. In den Türausschnittsöffnungen 3, 4 sind, wie dies in der Fig. 3 gezeigt ist, in etwa waagrecht verlaufende Einstiegsflächen 9 eines Schwellers oder Längsträgers 11 ausgebildet.

Eine ebenfalls in der Fig. 3 sichtbare Außenwand 10 des Längsträgers 11 ist von einer dazu beabstandeten Verkleidung 12 unter Bildung eines Hohlraumes 13 überdeckt. An einen in etwa senkrecht oder schräg nach oben verlaufenden seitlichen Verkleidungsabschnitt 14 schließt sich ein unterer, in etwa waagrecht verlaufender Verkleidungsabschnitt 15 an, der an einem Randabschnitt 16 eines Bodens 17 des Kraftfahrzeuges 1 befestigt ist.

Auch der untere Verkleidungsabschnitt 15 ist beabstandet zu einem Bodenabschnitt 18 des Längsträgers 11. An dem dazu gegenüberliegenden, als Einstiegsfläche 9 ausgebildeten, oberen Randabschnitt des Längsträgers 11 ist ein zusätzlicher, in etwa waagrecht verlaufender Verkleidungsabschnitt 19a und 19b befestigt.

Der zusätzliche Verkleidungsabschnitt 19a, 19b weist eine Vertiefung 20 auf, in der ein Einstiegsleistenelement 21 a, 21 b befestigt ist.

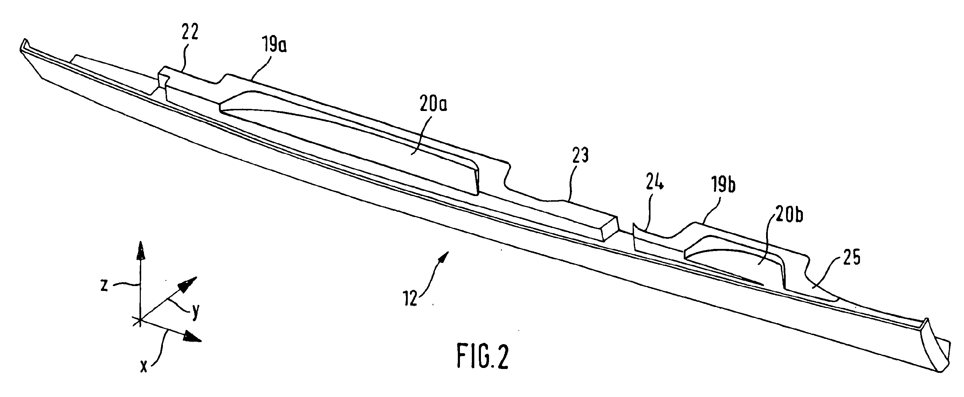

In der perspektivischen Ansicht der Fig. 2 sind die beiden Vertiefungen 20a und 20b in den Verkleidungsabschnitten 19a und 19b erkennbar. In der in den Fig. 1 und 2 gezeigten Ausführungsform der Verkleidung 12 weisen die Verkleidungsabschnitte 19a und 19b zusätzliche seitliche Randabschnitte 22 und 23 bzw. 24 und 25 auf, die sich zu den entsprechend benachbarten unteren Enden 26, 27, 28 der Säulen 5, 6, 7 hin erstrecken.

Aus der Fig. 3 geht zusätzlich hervor, dass die jeweilige Türausschnittsöffnung 3, 4 durch ein unteres Ende 29 einer Tür 30 überdeckt ist. Eine an dem unteren Ende 29 der Tür 30 angeordnete Dichtung 31 liegt an einem Außenrand 32 des Einstiegsleistenelementes 21 an.

## Patentansprüche

1. Verkleidung eines seitlichen Längsträger eines Kraftfahrzeuges, die mit einer Außenwand des Längsträgers einen Hohlraum bildet, die sich in Fahrzeuglängsrichtung zwischen einem vorderen und einem hinteren Radhaus erstreckt und unterhalb der Anzahl von vorhandenen Türausschnittsöffnungen bis zu einem Boden des Kraftfahrzeuges erstreckt,
**dadurch gekennzeichnet, dass** an der Verkleidung (12) entsprechend der Anzahl der Türausschnittsöffnungen (3, 4) zusätzliche Verkleidungsabschnitte (19a, 19b) integriert sind, die jeweils an einer in der betreffenden Türausschnittsöffnung (3, 4) ausgebildeten Einstiegsfläche des Längsträgers (11) angeordnet sind.

2. Verkleidung nach Anspruch 1,
**dadurch gekennzeichnet, dass** der jeweilige zusätzliche Verkleidungsabschnitt (19a, 19b) die betreffende Türausschnittsöffnung (3, 4) vollständig verkleidet und Randabschnitte (22, 23; 24, 25) aufweist, die jeweils eine Fläche an einem benachbarten unteren Ende (26, 27, 28) einer Karosseriesäule (5, 6, 7) überdecken.

3. Verkleidung nach den Ansprüchen 1 oder 2,
**dadurch gekennzeichnet, dass** der Verkleidungsabschnitt (19) eine Vertiefung (20) aufweist, in der ein Einstiegsleistenelement (21) angeordnet ist.

4. Verkleidung nach einem der vorhergehenden Ansprüche,
**dadurch gekennzeichnet, dass** die Verkleidung (12) und das Einstiegsleistenelement (21) aus einem Kunststoff hergestellt ist.

5. Verkleidung nach einem der vorhergehenden Ansprüche,
**dadurch gekennzeichnet, dass** das Einstiegsleistenelement (21) mit Designelementen versehen ist.

6. Verkleidung nach einem der vorhergehenden Ansprüche,
**dadurch gekennzeichnet, dass** der Kunststoff formsteif und lackierfähig ist.

## Claims

1. A covering on a side longitudinal member of a motor vehicle and co-operating with an outer wall of the longitudinal member to form a cavity which extends in the longitudinal direction between a front and a rear wheel aperture and under a number of door cut-out openings to a floor of the vehicle, **characterised in that** additional portions (19a, 19b) equal in number to the door cut-out openings (3, 4) are incorporated with the covering (12) and are each disposed on a respective entry surface on the longitudinal member (11) formed in the respective door cut-out opening (3, 4).

2. A covering according to claim 1,
**characterised in that** each additional covering portion (19a, 19b) completely conceals the respective door cut-out opening (3, 4) and has edge portions (22, 23; 24, 25) which each cover a respective surface on a neighbouring bottom end (26, 27, 28) of a body column (5, 6, 7).

3. A covering according to claim 1 or claim 2,
**characterised in that** the covering portion (19) has a recess (20) in which an entry sill element (21) is disposed.

4. A covering according to any of the preceding claims,
**characterised in that** the covering (12) and the entry sill element (21) are made of a plastics material.

5. A covering according to any of the preceding claims,
**characterised in that** the entry sill element (21) is provided with design elements.

6. A covering according to any of the preceding claims,
**characterised in that** the plastics material is dimensionally stable and paintable.

## Revendications

1. Habillage d'un longeron latéral d'un véhicule automobile, qui, forme un espace creux avec une paroi extérieure du longeron et s'étend dans la direction longitudinale du véhicule entre une arche de roue avant et une arche de roue arrière et en dessous du nombre de baies de portière existantes jusqu'à un plancher du véhicule,
**caractérisé en ce qu'**
des parties d'habillage (19a, 19b) supplémentaires sont intégrées dans l'habillage (12) et disposées sur une surface d'accès du longeron (11) formée respectivement dans la baie de portière (3, 4) concernée en fonction du nombre de baies de portière (3,4).

2. Habillage selon la revendication 1,
**caractérisé en ce que**
la partie d'habillage (19a, 19b) supplémentaire respective habille complètement la baie de portière (3, 4) concernée et présente des parties périphériques (22, 23 ; 24, 25) qui recouvrent respectivement une surface sur une extrémité inférieure (26, 27, 28) voisine d'une colonne de carrosserie (5, 6, 7).

3. Habillage selon la revendication 1 ou 2,
**caractérisé en ce que**
la partie d'habillage (19) présente un creux (20) logeant un élément de marchepied (21).

4. Habillage selon l'une quelconque des revendications précédentes,
**caractérisé en ce que**
l'habillage (12) et l'élément de marchepied (21) sont en matière plastique.

5. Habillage selon l'une quelconque des revendications précédentes,
**caractérisé en ce que**
l'élément de marchepied (21) est muni d'éléments esthétiques.

6. Habillage selon l'une quelconque des revendications précédentes,
**caractérisé en ce que**
la matière plastique est rigide de forme et peut être peinte.
